# EUROPEAN PATENT APPLICATION

(11) **EP 3 711 492 A1**
(43) Date of publication of application: **23.09.2020**
(21) Application number: 18877348.5
(22) Date of filing: 14.11.2018
(51) Int. Cl.: A23L 7/13, A23L 19/18

(54) **EXTRUDED FOOD PRODUCT SIMILAR TO FRENCH FRIES AND PREPARATION METHOD**

(30) Priority: 14.11.2017 CL 20172896
(71) Applicant: Universidad de Santiago de Chile, Santiago (ES)
(72) Inventor: ALMENDARES CALDERON, Laura del Carmen, Santiago (CL); ROMAN MIRANDA, José Manuel, Santiago (CL)
(74) Representative: Pons
(86) International application number: PCT/CL2018/000038
(87) International publication number: WO 2019/095081

(57) **Abstract**

The present Invention refers to an extruded food product, similar to stick-like fried potatoes, with improved technological characteristics when subjecting the food to the frying process, obtaining an end product similar to French fries having a low fat content. The Invention also refers to the procedure for manufacturing the extruded food product similar to fried potatoes.

## Description

### Technical Field

The present Invention refers to an extruded food product, similar to stick-like fried potatoes, with the particularity of having improvements in the technological characteristics when subjecting the food product to the frying process, obtaining an end product similar to French fries that has a low fat content. The product of the present Invention is manufactured based on raw materials with low commercial value, constituted by potatoes and rice-polishing byproducts with low oil absorption capacity at the time of frying. The Invention also refers to the procedure for manufacturing the extruded food product that is similar to fried potatoes.

### Background Information on the Invention

There is a large variety of food products available in the market that is based on high carbohydrate and fat content, fried potatoes being the most popular and preferred by the population from different age groups.

The fried potato "chips" absorb the largest amount of oil; its weight varying between 35 and 40%. Low fat French fries have been introduced into the market, containing approximately 20% of oil. However, these values are still high and unhealthy (Montes, N. et al, Absorción de aceite en alimentos fritos [Oil Absorption in Fried Food]. Revista Chilena de Nutrición, Vol. 43, N° 1, Santiago, March 2016).

Additionally, the main frozen potato product is the pre-fried potato, frozen in a stick-like shape (fried potato or French fries). Products are added to this, having other types of cuts (e.g. diced, small potatoes, sliced), or reworked with potato paste.

In the case of the frozen pre-fried potatoes, the technological development began in the 40's, when the entrepreneur J. R. Simplot convened a group of experienced chemists to perfect the process and, a decade later, obtained the first patent and entered the industry, albeit without achieving a significant turnover (Mateos, M. (2003). Document 15: Papa Prefrita Congelada [Frozen Pre-fried Potatoes]. Buenos Aires: Inter-American Institute for Cooperation on Agriculture).

In recent decades, poor diet has generated a series of health issues in people, especially in developed and developing countries, resulting in the emergence of a group of chronic non-communicable diseases, mainly triggered by processed food such as sugar-sweetened beverages, alcohol, fried food, fast food, and snacks (Durán, T. A. (2014). Hábitos alimentarios y condición física en estudiantes de pedagogía en educación física. [Eating Habits and Physical Condition in Physical Education Students], Revista Chilena de Nutrición, Vol. 41). This has caused nutrition to become one of the main pillars in the prevention of high prevalence diseases, such as obesity, high cholesterol, diabetes, or hypertension.

In order to provide a solution to this problem, the Inventors have developed a food product similar to fried potatoes that has a similar appearance, the characteristic taste of potato, and an improvement in the technological characteristics of the product, such as a healthy food option and alternative to fried products.

The potato (*Solanum tuberosum*) is one of the most popular foods in the world and the fried potato is one of the forms of mass consumption, that can be defined as: "potato product manufactured by cutting the potatoes into thick or thin strips, soaking them in cold water, drying them and frying them in oil" (IFIS, 2009). This food is also known as chips (United Kingdom), pommes frites (France), fried potatoes, or French fries. Therefore, main object of the present Invention is to obtain a product similar to French fries that is characterized by the low fat content and by being organoleptically comparable to the fried potatoes that are normally consumed.

The potato is a versatile food and has a high carbohydrate content (Table 1). Newly harvested, it contains approximately 80 percent water and 20 percent dry matter. Regarding its dry weight, the protein content of the potato is analogous to that of grains and is very high in comparison with other roots and tubers.

Furthermore, the potato has little fat. Potatoes have abundant micronutrients, particularly vitamin C. The potato contains a moderate amount of iron, but the high vitamin C content promotes the absorption of this mineral. In addition, this tuber has vitamins B1, B3, and B6, and other minerals such as potassium, phosphorus, and magnesium, as well as folate, pantothenic acid, and riboflavin. It also contains dietary antioxidants which can contribute to preventing diseases related to ageing, and fibers whose consumption is good for health. Table 1 shows - by way of example - the percentages of the different constituents of various potato varieties that are grown in Chile.

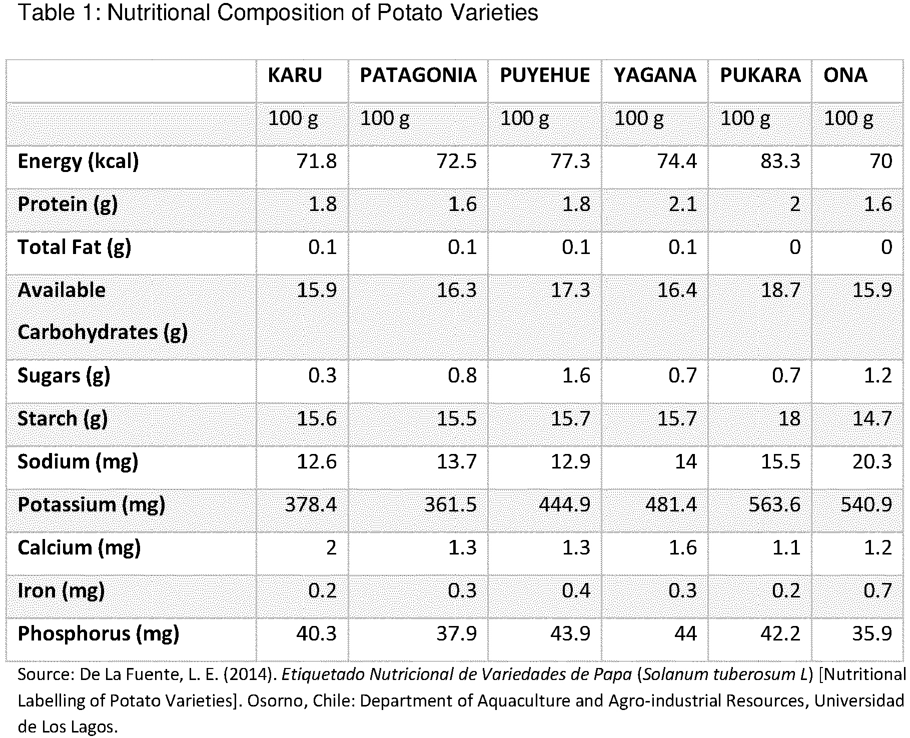

In addition, rice is another of the mass consumption foods, exploited since more than 10.000 years ago in the central anthropic Asia, mainly in the Chinese and Indian cultures. Rice only arrived to the Mediterranean culture in 350 BC.

There are two types of cultivated rice; the species *Oryza sativa L.* (Asian) and *Oryza glaberrima* L. or red rice (western Africa). Rice is also separated by variety: Indica, Japonica, and Javanica (FAO, 1990). It is also divided into glutinous and non-glutinous rice.

The starch from glutinous rice contains approximately 83% of amylopectin and about 17% of amylose: the starch from non-glutinous rice, approximately 27% of amylose and about 73% of amylopectin. The size of the rice kernel, as end product, depends on the variety used, among other integral factors of the agronomic crop component.

The rice flour that is used in the present Invention is produced by the polishing in the grain whitening operations or the grinding of rice tips or broken kernels. It is used to provide texture in various foods, including fried food, breakfast cereals, and baked goods. It is also used in thickeners for products such as sauce (IFIS I. F., 2009).

Rice flour has a nutritional composition (Table 2) similar to that of other grain flours: however, as it is gluten-free, it is not normally used in the making of bread and other products associated with wheat flour. Its consumption is chiefly recommended for celiac people, who are intolerant to the gluten from wheat and other grains (Cárdenas V., 2012).

**Table 2. Proximate Nutritional Composition of Rice Flour**

| | Amount in 100 g |
|---|---|
| Energy (kcal) | 357 |
| Protein (g) | 5.95 |
| Total Fat (g) | 1.42 |
| Cholesterol (mg) | 0 |
| Carbohydrates (g) | 85.47 |
| Fiber (g) | 6.5 |
| Calcium (mg) | 10 |
| Iron (mg) | 0.35 |
| Iodine (µg) | 1 |

| | |
|---|---|
| Source: the Ibero-American University Foundation FUNIBER. (July 16, 2017). Obtained from the International Database: http://www.composicionnutricional.com/alimentos/HARINA-DE-ARROZ-1 | |

The prior art referring to this technical field has disclosed a large variety of products that includes potato and rice derivatives. However, none of these documents is aimed at solving the technical problem that the present Invention solves, in connection with obtaining an extruded product having a low fat content.

It is also known that the use of rice-based thickening agents as additives is a good strategy for reducing oil absorption, improving the consistency and viscosity of dough made from long-grain rice flour. In particular, the gelatinized rice flour and phosphorylated rice starch esters can be effective in improving the oil absorption-reducing properties, due to the viscosity of this dough. It has been demonstrated that oil absorption is 50% less in foods coated with a batter based on rice flour, in comparison to corn or wheat flour. It was also determined that the formation of acrylamide was three times greater in this latter case (Shih FF, Daigle KW. Oil uptake properties of fried batters from rice flour. J Agric. Food Chem. 1999; 47:1611-5. Shih F, Boue SM, Daigle KW, Shih BY, Effects of flour sources on acrylamide formation and oil uptake in fried batters. J Am Oil Chem Soc. 2004. 81:265-8). Although there are studies showing a decrease in oil absorption in products coated with a batter based on rice flour, they do not reveal products such as the one of the present Invention corresponding to an alternative to stick-shaped fried potatoes that contains a mixture of potatoes and rice derivatives, and presenting the technological characteristics offered by the present Invention.

Patent US 3.297.450 is aimed at a method for producing - by means of extrusion - packaged crunchy fried potatoes, using a feedstock consisting in a dough that includes a mixture of dehydrated non-gelatinized potato powder, non-gelatinized potato starch, and an edible starch, which can be rice starch, and other additives. Although this product is made by extrusion, the raw materials and the content thereof differ from those of the present Invention, the amount of dehydrated potato powder being in a range of 50-90% and the amount of other edible grain or starch being in a range of 2-6%.

Another example is document GB 1109930: it discloses a process for preparing a fried potato product, pre-manufactured by the extrusion of a mixture which comprises a puree of fresh potatoes or a puree of rehydrated potato flakes or granules with a non-gelatinized potato starch. Although rice starch is mentioned, it is not used in the products obtained.

Document GB1413097 reveals a frozen fried potato product, manufactured from a dough that comprises particles of dehydrated potatoes, a binder such as guar gum, and potato, wheat, rice, corn and/or tapioca starch. The process for obtaining this product is not done by extrusion, but rather by cutting a shaped dough.

Document KR20030074578 proposes an extrusion method for manufacturing instant noodles from a mixture constituted by potato, rice flour, and gluten as main constituents, with the aim of making the forming of noodles easier when being extruded. Although this dough is extruded, this extrusion stage is done with the steam-cooked mixture and, once the noodles have been formed, then one proceeds to the frying stage of said noodles.

Document CN103960627 reveals a procedure for producing crunchy fried potatoes that uses as raw material a mixture which main comprises a potato puree mixed with glutinous rice starch and glutinous rice flour; the mixture is gelatinized by steam, at a temperature ranging between 58°C and 63ºC, then cooled, laminated, and dried prior to frying. In contrast to the present Invention, the potato flakes are not obtained by extrusion, and the mixture is subjected to a gelatinization process with heat.

### DESCRIPTION OF THE INVENTION

The object of the present Invention is to obtain an extruded food product, similar to stick-like fried potatoes, produced with the advantage of having improvements in the technological characteristics when subjecting the extruded product to the frying process, and obtaining an end product similar to French fries that has a low fat content and is organoleptically acceptable.

The procedure for obtaining the product of the present Invention comprises the following stages:
a) Manufacture of a wet potato pulp;
b) Manufacture of rice flour;
c) Mixing of the components of a), b), and additives;
d) Extrusion;
e) Preservation (cooling and refrigeration or freezing); and
f) Frying

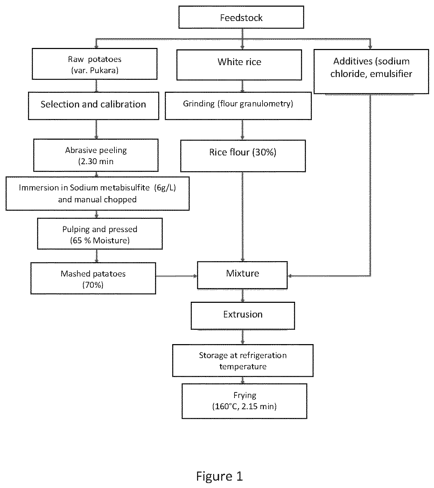

Figure 1 shows the flowchart of the manufacturing process for the product of the present Invention. Below are the detailed process stages.

### a) Manufacture of a wet potato pulp

For the manufacture of a wet potato pulp, the Pukara variety - created by the Agricultural Research Institute (INIA, by its acronym in Spanish) of the Chilean Ministry of Agriculture, of high domestic consumption, with a good availability and low price, which further presents qualities of maintain its structure during cooking, pleasant taste, and medium mealiness, was used.

In general, for fried products, it is preferable to utilize potatoes having a high dry matter content (specific gravity >1080, starch content >14%), because they result in products having better texture, greater performance/output, and less oil absorption. In addition, they accumulate less reducing sugar during storage (Cocio P, C. E. (2006). Estudio de la distribución de aceite en rodajas de papa frita [Study on Oil Distribution on Fried Potato Slices]. Santiago, Chile: Universidad de Chile, School of Chemical and Pharmaceutical Sciences, Department of Food Science and Chemical Technology). Similarly, potatoes containing less than 2 % of reducing sugars are required in the manufacture of fried products, in order to minimize the development of browning during processing, as a consequence of non-enzymatic browning reactions, as is the case of the Maillard Reaction (Cocio P, 2006), characteristics present in the potato variety that was used in the present Invention.

The potatoes were first subjected to selection and calibration, differentiating them between large and small, as per Table 3.

**Table 3. Size established for Differences in Caliber**

| | **Length (cm)** | **Width (cm)** |
|---|---|---|
| **Large Potato** | 13 ± 2 | 6 ± 2 |
| **Small Potato** | 8 ± 2 | 4 ± 2 |

After calibration, the potatoes were taken to a mechanical peeler (HOBART, 80 kg/h capacity, engine model 60 25 H.P 1/3 with 1450 RPM). This allowed removing the superficial potato skin by means of an abrasive mechanism, which further has a water stream that allows extracting the wastes from the operation (skin). After peeling, the potatoes were submerged in a container that had a sodium metabisulfite solution (Na₂O₅S₂) at a concentration of 6 g/l, so as to stop the enzyme browning during the entire process, preventing the generation of dark or brown areas caused by enzymatic reactions. In the solution, the potatoes were chopped, thereby favoring the action of the additive and its subsequent pulping. Then, the potatoes were pressed to decrease moisture in the potato pulp and reach a moisture content of less than 65%.

As a variation to the wet potato pulp manufacturing stage, after selection and calibration and before peeling, the potatoes were subjected to a thermal treatment conducted in a steel autoclave. Working conditions considered a pressure of 15 psi, and a temperature close to 120°C, during 7 minutes. After the autoclave processing stage, the potatoes were peeled and chopped. The chopped potatoes were inserted in the semi industrial SKYMSEN blender where, given their high consistency, it was necessary to add 25% of water to make blending easier and to create the paste.

As another variation to the potato puree manufacturing stage, after selection, calibration, and peeling in the mechanical HOBART peeler, just as in the first way of executing the wet pulp manufacturing stage, the peeled potatoes were submerged in a container with a sodium metabisulfite solution (Na₂O₅S₂) at a concentration of 4 g/l. In the solution, the potatoes were removed and inserted in a potato chopper, obtaining 10 mm thick segments and allowing for an easier action of the additive. The chopped potatoes were inserted in a grinder. To reduce the particle size, additionally a semi industrial SKYMSEN blender was used. Afterwards, the pressing was done in the same way as in the first variation for obtaining the wet potato pulp. In this circumstance, a maximum moisture of 65% was established.

### b) Manufacture of rice flour

For the present Invention, white rice flour was used (from the rice polishing), rice flour, and polished rice tip flour.

Regarding the rice kernels, there is little difference in terms of functionality in the use of broken fractions in comparison with rice ground from whole kernels: however it is often more expensive. The low fat rice flour adds crunchiness to the paste in the coating, a reduction in oil capture, a delayed transmission of moisture, and prolonged maintenance time (Eliasson & Ann-Charlotte (July 16, 2004). Starch in Food - Structure, Function and Applications. Obtained from Elsevier: http://app.knovel.com/hotlink/toc/id:kpSFSFA002/starch-in-food-structure/starch-in-food-structure). The processing quality of these flours largely depends on the inherent chemical profile of each sample and, also on its method of manufacture and the degree of gelatinization.

In order to obtain rice flour and rice-tip flour, the rice kernel was ground in two machines. In the tests conducted with the first mixture of wet potato pulp of the process, the rice grinding was carried out by means of a mill (BRABENDER Quadromat Junior, with a capacity of 100 g per minute).

In the tests conducted with the wet potato pulp mixtures, from the two variations, an electric mill (ROMER LABS, model 2A) was used.

### c) Mixing of the components

The mixing stage comprises incorporating in a semi industrial mixer (VENTUS, model B50A MIXER, 50 liter capacity) the ingredients corresponding to the wet potato pulp, the rice flour, and the additional ingredients, according to the different formulations tested, in order to achieve the mixture and homogenization of the ingredients in a standard way.

These additional ingredients include additives such as sodium chloride and sodium metabisulfite.

### d) Extrusion

Each of the mixtures obtained through the different formulations was subjected to the extrusion process, thereby arriving at a semi industrial development of the product.

The mixed feedstock was inserted at one end of the extruder and was extracted at the other end, at high pressure and temperature. Upon exiting the extruder, the mixture was shaped by means of a nozzle and eventually cut into approximately 12 cm long strips. The extrusion tests were carried out in a double screw BUHLER extruder, with a 1 meter run (screw length) and an 8 mm square matrix.

The extrusion conditions were adapted for each formulation. For the parameters of temperature, pressure, and screw speed, overall ranges were established, which encompass all formulations. The temperature range of the extruder outlet was 50-60°C, the screw speed was 175-210 RPM, and the pressure was set in a range between 25-40 bar.

The extruder used in the tests can be complemented with a vacuum generator that, in its turn, causes the effect of a decrease in pressure inside the conveyor cavity, thereby allowing a partial extraction of the moisture generated during the process, resulting in a decrease in moisture in the end product.

### e) Preservation

Upon exiting the extruder, the product has a temperature of about 60°C and, as practically any food product, tends to begin its deterioration phase. For this reason, the mechanism used for its preservation was storage at a refrigeration temperature of 4ºC.

### f) Frying

During frying, foods absorb between 5% and 40% by weight of oil, and release part of their lipids into the frying oil. Thus, the oil composition and stability can change during the frying process. The reactions between the frying oil and the proteins and carbohydrates of the foods contribute to the emergence of desirable and undesirable aromas (Frankel, E. (1998), Frying Fats. On Lipid Oxidation. In The Oily Press (pages 227-248). Dundee, Scotland). There are also changes inside their structural formation, such as modification in the cells, changes in phases of some components, or protein degradation during the frying process.

In the present Invention, this thermal treatment was applied to all samples with the help of an electric fryer (VENTUS CORP, model VFS-102) with adjustable thermostat. The means of immersion was 100% sunflower seed oil, which presents good behavior at high temperatures. The frying conditions were set at 160°C ± 2°C, for 2 minutes 15 seconds.

### Formulation Examples

The basic formulation used in the present Invention is made up of 70 % wet potato pulp and 30% rice flour.

The object of the present Invention is to obtain a product that is similar to stick-like fried potatoes, comparable to traditional French fries in taste, appearance, and aroma, factors that make the product pleasant and appetizing, for subsequent commercialization. To this end, it was necessary to incorporate additives: table salt was therefore used (sodium chloride).

The formulations done in the extruder, subjected to acceptability studies and proximal analyses, are shown in Table 4 where the basic formulation is used as control to observe the changes generated by the additives at different concentrations.

**Table 4. Formulations without Application of Vacuum in the Extrusion Process**

| Example | Potato (%) | Rice (%) | Salt (%) |
|---|---|---|---|
| 1 (Control) | 70 | 30 | - |
| 2 | 70 | 30 | 0.1 |

| | | | |
|---|---|---|---|
| Not added (-). | | | |

### Measurement of Physical and Chemical Properties

### Moisture Determination

The moisture determination was carried out for each of the feedstock and extruded products. Three equipment were used: air oven, infrared moisture analyzer, and a moisture analyzer with halogen lamp.

### • Wet potato pulp

First, there is the traditional moisture determination method, in an air oven. 2 to 5 g were measured and placed in an oven at 103 ± 2°C for 3 hours. Then, the sample was weighed every 10 minutes until it reached a constant weight (A.O.A.C, 1990). The method is based on the gravimetric determination of mass low of a dried sample, until reaching a constant mass. This mechanism was used for the wet potato pulp samples and their corresponding mixtures. The average moisture of the wet potato pulp in the formulations of the present Invention is 66.2%

### • Rice Flour

The moisture determination in rice flour was carried out with an infrared moisture analyzer (KERN, model MLS-D). The oven was regulated at 105°C; this methodology is based on NCh 841.Of 78 *"Alimentos* - *Determinación de humedad"* [Foods - Moisture Determination]. 2 to 3 grams were weighed until reaching a constant weight. The machine records variations of 0.001 g. The average moisture of the rice flour in the formulations of the present Invention is 12.0%

### • Extruded Product

The moisture determination of the extruded product, after exiting the extruder, was done in a moisture analyzer HC103 METTLER TOLEDO 0.01%, which operates with a halogen lamp and an infrared sensor that record the variations in weight, at 105°C. 1 ± 0.02 grams of the sample was weighed in the analyzer, previously homogenized, thus starting the drying process that ends when the instrument detects a constant mass. This analysis is based on the gravimetric principle of moisture percentage calculation by a difference in weight. The average moisture of the extruded formulations is approximately 40%.

### Measurement of Organoleptic Properties

### 1. Oil Absorption

Oil absorption is one of the main parameters evaluated in the present Invention, with the aim of proving that the obtained product corresponds to a product that is an alternative to fried potatoes and has low fat content.

The oil absorption determination of the fried samples was done following the Bouchon method (Bouchon, P. A. (2003). Structure Oil-Absorption Relationships during Deep-Fat Frying. Journal of Food Science, 68(9), 2711-2716). The total oil content was determined by solvent extraction, using the Soxhlet technique (AOAC, 1984). The potato sticks were ground, thereby obtaining homogeneity in the samples, from which 5 grams, approximately, were weighed and transferred to an extraction thimble. A 250 ml ball was dried and weighed prior to adding 130 ml petroleum ether. The extraction lasted 4 hours, using the Soxhlet machine. The solvent was removed in a rotary evaporator. The ball containing the extracted oil, was placed to dry until obtaining a constant weight, by heating in an air oven at 105°C. The samples were analyzed in duplicate and the results were expressed as percentage of oil, on a dry basis.

Oil absorption is influenced by a series of factors and cofactors that increase or decrease the values thereof. In the case of fried potatoes, the greatest oil retention occurs on the surface and in holes or capillaries inside the crust (Aguilera J. M. & Gloria H. (1997). Determination of oil in fried potato products by differential scanning calorimetry. Journal of Agriculture Food Chemistry). When dealing with a product similar to a fried potato, the surface imperfections are influenced during the shaping process, during the extrusion, and so it is expected that during frying the oil retention takes place on the product surface.

Observing the results obtained in Table 5, the formulation with 0.1% salt presents a 65% decrease in oil absorption with regard to the similar products. This could be due to that the mass transfer is characterized by the loss of moisture and the gain in oil, phenomena that operate in countercurrent. Salt, or sodium chloride, is a hygroscopic compound that retains the available water particles, thereby causing the water molecules inside the food to participate in the solvation of the ions coming from the salt, thus achieving a decrease in the water activity (a_{w}) of the formulation. For this reason, when there is a decrease in moisture loss, a decrease in oil absorption would be generated. This result is extremely important because it directly influences the characteristics that are sought in developing the product.

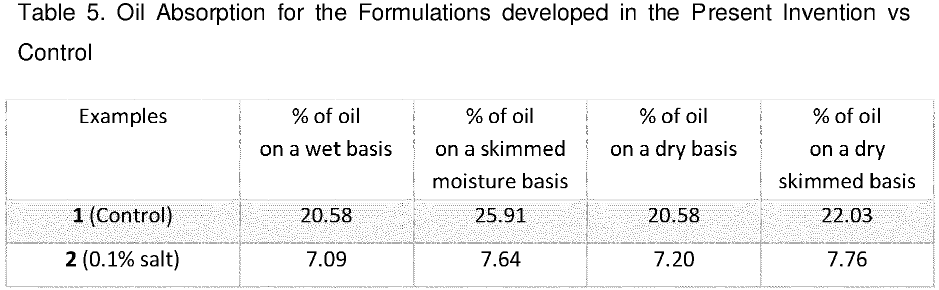

### 2. Proximal Determination

Proximal analyses were done on the extruded product, in order to learn about the most significant components thereof. The analyses were carried out at the premises of the CECTA-USACH Laboratory, accredited by the INN under the standard NCh-ISO 17025 LE: 1164. The components to be considered were: moisture content (PQM 001 revision 06, 2014, based on NCh 841. Of 78); proteins (PQM 002, revision 07, 2015, based on PTR-711.02-173 ISP, 2009); lipids (PQM 003, revision 05, 2012 based on procedure PTR-701.04-156 from ISP, 1998); ashes (PQM 004, revision 05, 2012 based on NCh 842.Of 78); raw fiber (PQM 005, revision 06, 2014 based on AOAC, 962.09, 2010); non-nitrogenous extracts, (PQM 006, revision 01, 2014, based on Schmindt- Hebbel, pages 32-1981); and energy, (PQM 007, revision 01, 2014, based on Schmindt-Hebbel, 1981).

The proximal analysis of the product similar to fried potatoes was done, taking into account moisture content, proteins, lipids, ashes, and non-nitrogenous extract (NNE), according to the official methodologies. The analyses were carried out at the premises of the CECTA-USACH Laboratory, accredited by the INN under the standard NCh-ISO 17025 LE: 1164 at the Universidad de Santiago de Chile.

The data collected in Table 6 ratify that the salt, being a hygroscopic compound that captures water particles, allows reaching the highest values of moisture for the developed formulations. The non-nitrogenous extract, which represents the fraction of soluble carbohydrates, presents a decrease in the formulation with salt. This value can be due to a lack of homogenization in the sample taking.

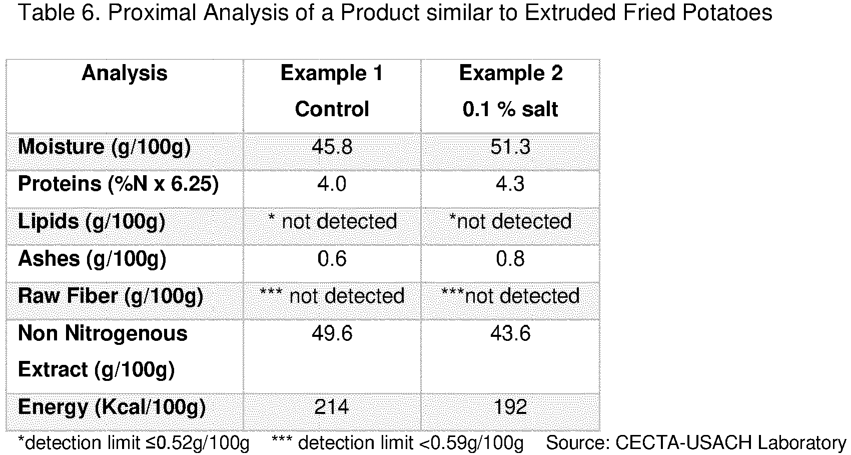

### 3. Sensory Determination

The sensory assessment of the food product developed represents the preference of the evaluators who expressed it through the attributes of: aroma, stick length, color, taste, and residual oiliness. Once the sticks had been fried, the sensory quality thereof was determined through the methodology of descriptive quantitative analysis (Trinchero & col., 2008), using unstructured scales, 15 cm long. The average values of each descriptor are shown in Table 7. The sensory analysis was done in keeping with UNE-ISO 6658:2008. 25 panelists were recruited, according to Pedrero & Pangborn (1989) for the sensory analysis of the samples of the food product similar to fried potatoes.

The acceptability of the extruded product, according to an unstructured guideline, was defined from the ranges, in which the measurement unit was centimeters. The rejection area is 0 - 6.99 cm; the indifference area, 7 - 7.99; and the acceptability area, 8 - 15 cm.

The stick firmness is a characteristic of texture that is related with the starch content and cell structure. No significant differences as to firmness (p< 0.05) were observed between the treatments.

In the residual oiliness and taste values, no significant differences were observed between the treatments.

As to the attributes of color and aroma, there were significant differences (Table 7). Out of the group of treatments, the one having the greatest evaluation in the scale - considering these two factors - is the one formed by the addition of salt at 0.1%, generating an increase in the sensory aptitudes of the product.

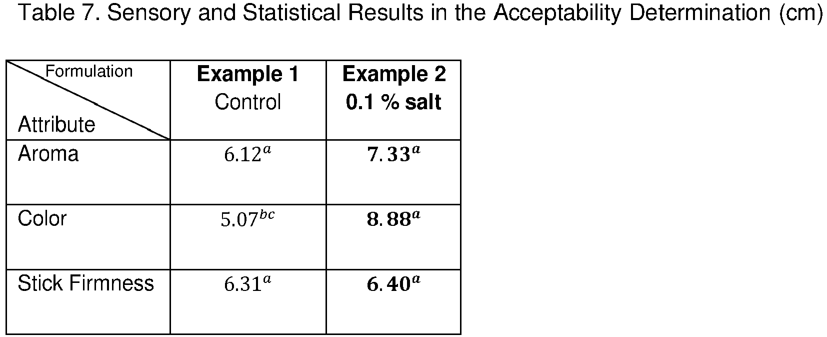

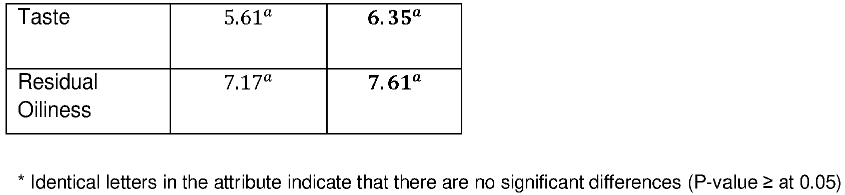

### 4. Texture Determination

Texture is regarded as a positive attribute of quality for the formulation of foods. In this study, a soft food texturometer was used (Agrosta® Texturometer Version 2), with the aim of learning more about the food product's characteristics. The texture analysis was conducted on the extruded end product, yet it was necessary to define the working conditions and parameters because there are no standard values, it being a new product and there being no studies of similar products in the market.

The main characteristic of fried potatoes is their crunchy texture, considered to be one of the most important quality indicators in the end product. This is assessed by the fracturability, which is defined as the first significant drop in the curve, during the first compression cycle, resulting from a high level of hardness and low level of cohesiveness. It refers to the hardness with which the food product crumbles, crunches, or bursts. It is expressed in Newton units of force (Sanchez, M. M. (2016). Texturometría Instrumental: Puesta a punto y aplicación a la tecnologfa de alimentos [Instrumental Texturometry: Set-up and Application in Food Technology]. Michoacán: Instituto Tecnológico Superior de Apatzingán [Higher Technological Institute].

The texture analysis was carried out by taking 10-12 sticks of each formulation of the present Invention. 4 measurements were made lengthwise to each stick, to have a more precise average of the behavior of the whole stick. This analysis used a penetration speed of 1mm/s, a penetration distance of 15 mmm and a cylindrical accessory 5 mm in diameter.

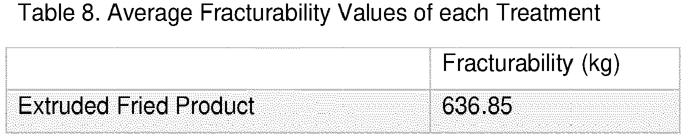

The recorded values are not comparable through bibliography, given that they deal with a new food product.

## Claims

1. An extruded food product, similar to fried potatoes ideal for frying, **CHARACTERIZED IN THAT** it comprises potato pulp, rice flour, and additives, in which the ratio by weight between the potato pulp and rice flour is 7:3.

2. The food product from Claim 1, **CHARACTERIZED IN THAT** the potato pulp is a wet potato pulp having a moisture content no greater than 65%.

3. The food product from Claim 1, **CHARACTERIZED IN THAT** the rice flour comes from rice polishing and from the tips of polished rice.

4. The food product from Claim 4, **CHARACTERIZED IN THAT** the additive is sodium chloride (table salt).

5. The food product from Claim 4, **CHARACTERIZED IN THAT** the sodium chloride is present in an amount of 0.005 to 1% w/w.

6. The food product from the preceding Claims, **CHARACTERIZED IN THAT** the extruded product after the frying stage is a low-fat product.

7. The food product from the preceding Claims, **CHARACTERIZED IN THAT** the extruded product after the frying stage presents an oil content of between 5 and 10%.

8. The food product from the preceding Claims, **CHARACTERIZED IN THAT** it presents a stick-like shape, comparable to traditional French fries.

9. A procedure for obtaining an extruded food product similar to fried potatoes ideal for frying, **CHARACTERIZED by** comprising the stages of:
a) Preparing a moist potato pulp;
b) Making the rice flour;
c) Mixing in a conventional way the components of a), b), and additives;
d) Extruding in a double screw extruder;
e) Frying in 100% sunflower seed oil, at a temperature of 160°C ±2°C, for 2 minutes, 15 seconds.

10. The procedure of Claim 9, **CHARACTERIZED IN THAT** stage a) consists of:
i) selecting and calibrating the raw potatoes;
ii) pealing and chopping the potatoes;
iii) immersing in sodium metabisulfite;
iv) grinding and pressing;
where the percentage of moisture of the potato pulp does not exceed 65%.

11. The procedure of Claim 9, **CHARACTERIZED IN THAT** stage b) comprises the grinding of the rice grain from the rice polishing and from the rice tips.

12. The procedure of Claim 9, **CHARACTERIZED IN THAT** the extruded product obtained (in d) prior to the frying stage (f) can optionally be preserved by cooling at a temperature of 4ºC, for prolonged periods of up to 15 days.
